# FASCICULE DE BREVET EUROPEEN

(11) **EP 2 993 452 B1**
(45) Date de publication et mention de la délivrance du brevet: **17.05.2017**
(21) Numéro de dépôt: 15180590.0
(22) Date de dépôt: 11.08.2015
(51) Int. Cl.: G01L 9/00

(54) **CAPTEUR DE PRESSION D'UN FLUIDE**
DRUCKSENSOR EINES FLUIDS
FLUID PRESSURE SENSOR

(30) Priorité: 26.08.2014 FR 1458002
(43) Date de publication de la demande: 09.03.2016
(73) Titulaire: Commissariat à l'Énergie Atomique et aux Énergies Alternatives, 75015 Paris (FR)
(72) Inventeur: Reverdy, Jacques, 38920 CROLLES (FR); Thomas, Thierry, 38760 VARCES ALLIERES ET RISSET (FR)
(74) Mandataire: Colombo, Michel

(56) Documents cités:
- DE-B3-102005 016 812
- JP-A- H03 131 733
- US-A- 3 731 184

## Description

L'invention concerne un capteur de pression d'un fluide ainsi qu'un procédé de fabrication de ce capteur.

Par « capteur de pression », on désigne un capteur qui mesure la différence entre la pression du fluide et une pression de référence. Cette pression de référence peut être nulle.

Il existe un grand nombre de situations où la pression d'un fluide circulant à l'intérieur d'un conduit doit être mesurée sans interrompre la circulation de ce fluide. Un exemple d'un tel capteur est décrit dans la demande internationale WO9956614 dans le cas très particulier où le tuyau souple est une veine ou une artère.

Ce capteur connu comporte notamment :
- un tuyau souple s'étendant autour et le long d'un axe central, ce tuyau étant apte à contenir le fluide dont la pression doit être mesurée et à se déformer sous l'effet de la pression exercée par le fluide, entre :
   - une première position déformée pour une première pression exercée par le fluide, dans cette première position le tuyau présentant un premier et un second endroits différents de sa périphérie dont les projections orthogonales dans un plan perpendiculaire à l'axe central sont séparées par une distance d₁, et
   - une seconde position déformée pour une seconde pression exercée par le fluide supérieure à la première pression, dans la seconde position les projections orthogonales des premier et second endroits dans le plan perpendiculaire à l'axe central sont séparées par une distance d₂, l'écart entre les distances d₂ et d₁ étant au moins supérieur à 0,1d₂,
- une bobine dont l'inductance propre varie en fonction de la pression du fluide à l'intérieur du tuyau souple, cette bobine comportant au moins une spire enroulée autour d'un axe d'enroulement de la bobine,
- une unité de calcul de la pression du fluide en fonction de l'inductance propre de la bobine.

Plus précisément, dans ce capteur connu, pour faire varier l'inductance propre de la bobine, on utilise un noyau magnétique fixé sur un côté du tuyau souple. Ce noyau magnétique se déplace en même temps que le tuyau souple se déforme sous l'effet de la pression du fluide. C'est le déplacement de ce noyau magnétique par rapport à la bobine qui fait varier l'inductance propre de la bobine et permet donc de mesurer la pression du fluide à l'intérieur du tuyau souple. À cet effet, l'axe d'enroulement de la bobine est parallèle à la direction de déplacement du noyau magnétique et donc perpendiculaire à l'axe central du tuyau souple. Dans ce capteur connu, la bobine est rigide et fixée sans aucun degré de liberté à l'intérieur d'une coque elle-même rigide.

De façon assez proche JPH03-131733A et DE102005016812B3 divulguent un capteur de pression dans lequel le noyau magnétique entoure le tuyau souple. C'est alors la déformation du noyau magnétique par le tuyau souple qui provoque une variation de l'inductance de la bobine.

De l'état de la technique est également connu de US3731184A. Dans ce document la déformation du tuyau souple fait varier la surface de la section transversale de la bobine et donc son inductance propre. Pour cela, les spires de la bobine sont chacune formées d'un fil conducteur ondulé. La réalisation d'une telle bobine est complexe.

Ce capteur connu fonctionne correctement. Toutefois, il est souhaitable de le simplifier pour le rendre plus simple à fabriquer. L'invention vise à résoudre ce problème. Elle a donc pour objet un capteur conforme à la revendication 1.

En plaçant l'axe d'enroulement de la spire parallèlement à l'axe central du tuyau souple et en raccordant deux portions distinctes de sa périphérie à deux endroits différents sur le tuyau souple, une déformation du tuyau souple entraîne une modification de la surface transversale de la spire. Cette modification de la surface transversale de la spire provoque une variation de l'inductance propre de la bobine. Cette variation de l'inductance propre de la bobine est donc obtenue sans utiliser un noyau magnétique déplacé par le tuyau souple, ce qui simplifie la fabrication du capteur. De plus, l'absence de noyau magnétique permet d'étendre le champ d'utilisation de la partie du capteur solidaire du tuyau souple. Par exemple, cette partie est compatible avec l'imagerie médicale IRM (Imagerie à Résonance Magnétique).

De plus, prévoir un jeu entre une portion de la périphérie intérieure de chaque spire et la périphérie extérieure du tuyau souple permet d'avoir des spires dont la section transversale varie avec la déformation du tuyau tout en conservant, en même temps, un périmètre constant pour chacune de ces spires. Cela simplifie la réalisation de la bobine. En effet, il est dès lors possible de conserver une forme simple à réaliser pour la spire tout en utilisant un fil conducteur beaucoup moins élastique que le matériau du tuyau souple pour fabriquer la bobine. En particulier, contrairement à ce qui est fait dans l'état de l'art, il n'est pas nécessaire que le fil de la spire soit ondulé pour qu'une dilatation du tuyau souple ne provoque pas une rupture de la spire de la bobine.

Les modes de réalisation de ce capteur peuvent comporter une ou plusieurs des caractéristiques des revendications dépendantes.

Ces modes de réalisation du capteur présentent en outre les avantages suivants :
- utiliser un fil en matériau conducteur, enroulé autour de deux renforts et du tuyau souple permet de simplifier la fabrication du capteur et notamment l'insertion du tuyau souple à l'intérieur des spires ;
- placer la bobine à côté du tuyau souple facilite la fabrication de ce capteur, car il n'est alors pas nécessaire d'insérer le tuyau souple à l'intérieur des spires ;
- de même, placer la bobine entièrement à l'intérieur du tuyau souple permet de réduire l'encombrement du capteur;
- former chaque spire à l'aide d'un brin supérieur et d'un brin inférieur qui se rejoignent au niveau d'une arête plane permet de fabriquer ces spires à plat, ce qui simplifie la fabrication du capteur ;
- fabriquer les spires et le condensateur à partir d'un même circuit imprimé facilite la fabrication du capteur ;
- utiliser un renfort améliore le maintien de l'écartement des spires de la bobine le long de son axe d'enroulement et concourt à fiabiliser la mesure de la pression;
- utiliser un pas de spire inférieur à un vingtième du périmètre intérieur de cette spire permet de diminuer la surface longitudinale de la bobine sans diminuer l'amplitude des variations de la surface des spires ce qui améliore la précision de la mesure de la pression,
- lorsque la spire s'enroule autour du tuyau, placer les portions de la spire fixées au tuyau de part et d'autre de son axe d'enroulement augmente la déformation de la spire et donc la précision de la mesure.

L'invention a également pour objet un procédé de fabrication du capteur de pression revendiqué.

Le procédé de fabrication peut comporter les caractéristiques de la revendication dépendante de procédé.

Ces modes de réalisation du procédé de fabrication présentent en outre les avantages suivants :
- réaliser la bobine à partir d'une piste électrique zigzaguant dans un plan autour de l'axe d'enroulement simplifie la fabrication de cette bobine et permet d'éviter d'avoir à enrouler un fil conducteur autour de cet axe d'enroulement.

L'invention sera mieux comprise à la lecture de la description qui va suivre, donnée uniquement à titre d'exemple non limitatif et faite en se référant aux dessins sur lesquels :
- la figure 1 est une illustration schématique, partiellement en coupe verticale, d'un capteur de pression ;
- les figures 2 et 3 sont des illustrations schématiques, en coupe transversale, d'une spire du capteur de la figure 1 dans deux positions extrêmes ;
- la figure 4 est une illustration schématique, en vue de dessus, d'un premier mode de réalisation d'une bobine du capteur de la figure 1 ;
- la figure 5 est un graphe représentant l'évolution de l'inductance propre de la bobine du capteur de la figure 1 en fonction de la déformation d'un tuyau souple de ce même capteur ;
- la figure 6 est un organigramme d'un procédé de fabrication du capteur de la figure 1 ;
- la figure 7 est une illustration schématique, en vue de dessus, d'un deuxième mode de réalisation d'une bobine du capteur de la figure 1 ;
- la figure 8 est un organigramme d'un autre procédé de réalisation d'une bobine ;
- la figure 9 est une illustration schématique, en vue de dessus, de la bobine réalisée à l'aide du procédé de la figure 8 ;
- la figure 10 est un organigramme d'un autre procédé de fabrication d'une bobine ;
- les figures 11 et 12 sont des illustrations schématiques de différentes étapes de fabrication du procédé de la figure 10 ;
- la figure 13 est une illustration schématique, en vue de dessus, d'un premier mode de réalisation d'un condensateur raccordé avec la bobine du capteur de la figure 1 ;
- la figure 14 est une illustration schématique, en coupe verticale, du condensateur de la figure 13 ;
- la figure 15 est un schéma électrique du circuit électrique correspondant à l'ensemble représenté sur la figure 13 ;
- la figure 16 est une illustration schématique, en vue de dessus, d'un troisième mode de réalisation d'une bobine pour le capteur de la figure 1 ;
- les figures 17 et 18 sont des illustrations schématiques, respectivement en vue de dessus et en vue de dessous, de la bobine de la figure 16 ;
- les figures 19 et 20 sont des illustrations schématiques, en coupe transversale, respectivement, d'un deuxième et d'un troisième modes de réalisation d'un capteur de pression ;
- les figures 21 et 22 sont des illustrations schématiques, en vue de dessus, de deux autres modes de réalisation supplémentaire d'une bobine pour le capteur de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

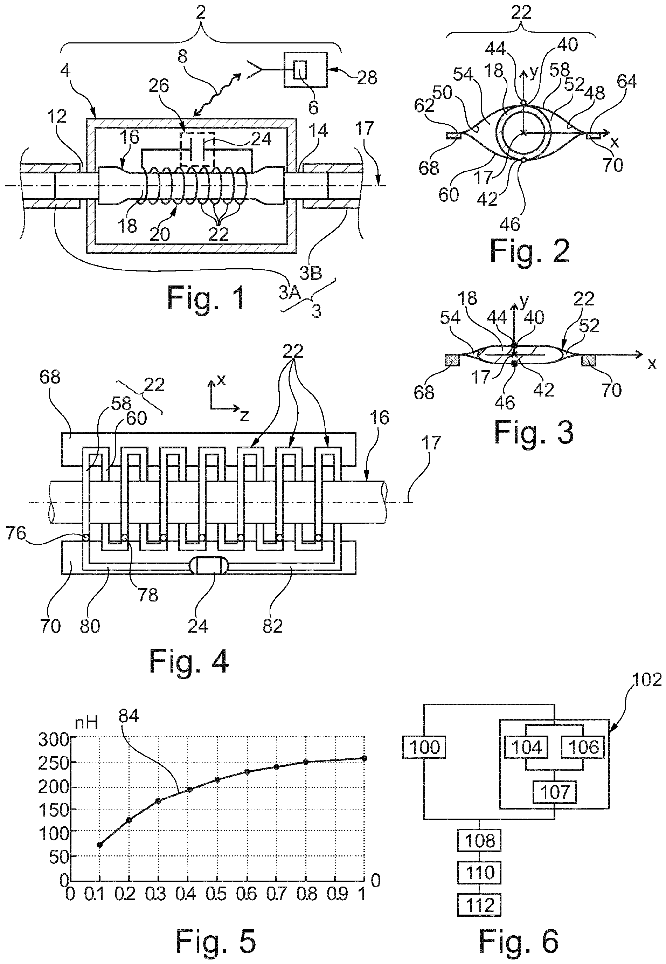

La figure 1 représente un capteur 2 de pression d'un fluide circulant à l'intérieur d'un conduit 3. Ce fluide peut être un gaz ou un liquide. Le capteur 2 comporte notamment :
- un boîtier rigide 4, et
- une unité 6 de mesure et de calcul reliée au boîtier 4 par une liaison 8 sans fil de transmission d'informations.

Par la suite, par « rigide », on désigne un élément réalisé dans un matériau dont le module de Young est supérieur à 2 GPa ou 3 GPa ou 10 GPa ou 50 GPa à 25°C.

A titre d'illustration, ici, le boîtier 4 a sensiblement la forme d'un parallélépipède. Il est interposé entre les extrémités opposées de deux parties 3A et 3B du conduit 3. Il est raccordé fluidiquement à ces deux parties 3A et 3B de manière à permettre la circulation du fluide de la partie 3A vers la partie 3B.

À cet effet, le boîtier 4 comporte 2 manchons 12 et 14 traversant chacun une paroi du boîtier 4. Ces manchons sont fixés sans aucun degré de liberté à ces parois. De préférence, les manchons 12 et 14 sont situés sur des parois opposées du boîtier 4 et en vis-à-vis l'un de l'autre.

Chaque manchon 12, 14 comporte une extrémité extérieure qui débouche à l'extérieur du boîtier 4 et une extrémité intérieure qui débouche à l'intérieur du boîtier 4. La partie 3A du conduit 3 est directement raccordée fluidiquement et de façon étanche à l'extrémité extérieure du manchon 12. Par exemple, une extrémité de la partie 3A est emmanchée en force sur l'extrémité extérieure du manchon 12.

La partie 3B du conduit 3 est directement raccordée fluidiquement de la même manière sur l'extrémité extérieure du manchon 14.

Les extrémités intérieures des manchons 12 et 14 sont fluidiquement raccordées l'une à l'autre par un tuyau souple 16 qui s'étend le long d'un axe rectiligne central 17 et entoure cet axe 17. Ici, l'axe 17 est horizontal. Chaque extrémité du tuyau 16 est raccordée fluidiquement et de façon étanche à une extrémité intérieure respective des manchons 12 et 14. Entre ces deux extrémités, le tuyau 16 comporte une partie centrale déformable 18.

Le tuyau 16 est qualifié de « souple » car sa partie centrale 18 est capable de se déformer, par déformation élastique, sous l'effet de la pression du fluide qui le traverse, entre une position P₁ et une position P₂. Par exemple, la déformation du tuyau peut s'effectuer par flexion d'une partie de sa circonférence en appui sur deux génératrices et/ou par distension élastique de sa paroi. Ici, la position P₁ correspondant au cas où le tuyau 16 est vide et ne comporte pas de fluide. Dans la position P₁, la surface de la section transversale de la partie centrale 18 est notée S₁. À l'inverse, la position P₂ correspondant au cas où le tuyau 16 est rempli d'un fluide qui exerce sur le tuyau une pression maximale. Dans la position P₂, la surface de la même section transversale de la partie centrale 18 est notée S₂. À cause des déformations du tuyau 16 sous l'effet de la pression du fluide, la surface S₂ est strictement supérieure à la surface S₁. Dans ce mode de réalisation, la surface S₁ est nulle ou très petite devant la surface S₂. Le tuyau 16 est considéré comme étant souple, car l'écart entre les surfaces S₂ et S₁ est au moins supérieur à 0,2S₂ et, de préférence, supérieur à S₂ ou à 2S₂. Pour cela, le tuyau 16 est réalisé avec une paroi de faible épaisseur et/ou dans un matériau souple. Par « faible épaisseur », on désigne le fait que l'épaisseur de la paroi de la partie 18 du tuyau 16 est dix fois, et de préférence vingt ou trente fois, inférieure au périmètre de ce tuyau. Par matériau souple, on désigne un matériau dont le module de Young est strictement inférieur à 1 GPa ou à 0,5 GPa à 25°C. Par exemple, le matériau souple est un élastomère comme du caoutchouc ou du silicone ou un autre polymère ayant des propriétés élastiques.

Le boîtier 4 comporte aussi une bobine 20 formée de plusieurs spires 22 enroulées chacune autour d'un même axe d'enroulement. Dans ce mode de réalisation, l'axe d'enroulement de la bobine 20 est confondu avec l'axe 17, et chaque spire est enroulée autour de la partie centrale 18 du tuyau 16. Ici, les spires 22 sont toutes identiques les unes aux autres et seule une spire 22 est décrite plus en détail par la suite.

Les extrémités de la bobine 20 sont électriquement raccordées à un condensateur 24 pour former avec ce condensateur 24 un circuit résonnant LC. La capacité du condensateur 24 est constante et connue, de sorte que toute variation de la fréquence d'oscillation du circuit résonnant LC est principalement due à une variation de la valeur de l'inductance propre L de la bobine 20. Ainsi, la fréquence de résonance du circuit LC est représentative de la valeur de l'inductance propre L et donc de la pression exercée par le fluide.

Dans un mode de réalisation préféré, le condensateur 24 est le condensateur d'un circuit intégré qui forme, en combinaison avec la bobine 20 une étiquette RFID 26 (Radio Frequency Identification). La bobine 20 constitue dans ce cas l'antenne de cette étiquette 26 par laquelle le circuit LC reçoit de l'énergie électrique et transmet des informations en modulant le champ électromagnétique rayonné par la bobine 20. Ces informations peuvent être des données d'identification de la partie du capteur enfermée dans le boîtier 4 ou des données de paramétrage aptes à contribuer au calcul de la pression par l'unité 6 à partir de la valeur de la fréquence de résonance du circuit résonnant. Par exemple, le circuit intégré peut embarquer un capteur de température et transmettre l'information de température pour appliquer des corrections dans le calcul de la pression en fonction de la température par l'unité 6.

L'unité 6 est programmée pour calculer la pression du fluide à l'intérieur du tuyau 16 à partir de la valeur de la fréquence de résonance du circuit résonant formé par la bobine 20 et le condensateur 24. Par exemple, lors d'une phase de calibration, un abaque reliant les fréquences de résonance du circuit résonant LC à des pressions du fluide est construit. Ensuite, lors de l'utilisation du capteur 2, cet abaque est utilisé pour convertir chaque fréquence de résonance mesurée en une pression mesurée. L'unité 6 est, par exemple, réalisée comme décrit dans la demande WO9956614. Elle ne sera donc pas décrite plus en détail.

Dans ce mode de réalisation, le boîtier 4 n'est pas étanche à l'air de sorte que la pression à l'intérieur du boîtier 4 est égale à la pression atmosphérique. Par conséquent, la pression mesurée par le capteur 2 correspondant à la différence entre la pression du fluide et la pression atmosphérique.

Typiquement, l'unité 6 fait partie d'un terminal 28 qui utilise la pression mesurée pour commander un appareil électronique tel qu'un afficheur ou autre. Ici pour simplifier la figure 1, ce terminal 28 est représenté comme faisant partie du capteur 4 . Toutefois, ce n'est pas nécessairement le cas. Par exemple, l'unité 6 n'est pas intégrée dans un tel terminal 28 mais raccordée au terminal 28 par un liaison de transmission d'informations. Dans ce dernier cas, le terminal 28 ne fait pas, en général, partie du capteur 4.

La figure 2 représente plus en détail une spire 22 de la bobine 20 enroulée autour de la partie centrale 18 du tuyau 16 dans le cas où ce tuyau 16 se trouve dans sa position P₂. On suppose ici que dans la position P₂, la section transversale du tuyau 16 est circulaire et centrée sur l'axe 17. Sur cette figure et les suivantes, la direction X est la direction horizontale perpendiculaire à l'axe 17, et la direction Y est la direction verticale. Les termes tels que « supérieur », « inférieur », « haut », « bas », « au-dessus », « au-dessous » et similaires sont définis par rapport à la direction Y

La spire 22 est formée par une piste électrique qui fait exactement un tour complet autour de l'axe 17. Cette piste est réalisée dans un matériau bon conducteur, c'est-à-dire un matériau dont la résistivité à 20°C est inférieure à 10⁻³ Ω.m ou 10⁻⁵ Ω.m ou 10⁻⁷ Ω.m. Généralement, il s'agit d'un métal. Par exemple, la spire 22 est réalisée en cuivre.

Les métaux sont très rigides, c'est-à-dire qu'ils présentent généralement un module de Young à 25°C supérieur à 10 GPa ou à 50 GPa voire même supérieur à 100 GPa. La spire 22 est donc beaucoup plus rigide que le tuyau 16. Ainsi, dans ce mode de réalisation, la spire 22 est agencée pour se déformer en flexion. Pour éviter que les déformations du tuyau souple 16 ne génère une contrainte en tension trop importante dans la spire 22, A cet effet, cette spire 22 comporte uniquement une portion supérieure 40 et une portion inférieure 42 fixées directement chacune, sans aucun degré de liberté, respectivement, à des endroits 44 et 46 de la périphérie extérieure du tuyau 16. Les portions 40, 42 sont fixées sur les endroits 44, 46 par des liaisons mécaniques. Dans ce mode de réalisation, les endroits 44 et 46 sont des zones de la périphérie du tuyau 16 qui sont en appui mécanique, respectivement, sur les portions 40 et 42 de la spire 22. Ici, on considère qu'un endroit 44, 46 est en appui mécanique sur une portion respective de la spire 22 si le raccordement mécanique entre cet endroit et cette portion respective de la spire se fait sans passer par l'intermédiaire d'un autre morceau du tuyau 16. Ici, chaque spire 22 est en appui sur des endroits 44, 46 respectifs du tuyau 16. Typiquement, les différents endroits 44 et 46 de chaque spire sont alignés sur des axes parallèles à l'axe 17.

Par la suite, on note d₁ la distance qui sépare les projections orthogonales des endroits 44 et 46 dans un plan transversal perpendiculaire à l'axe 17 lorsque le tuyau 16 est dans la position P₁. On note d₂ la distance qui sépare les projections orthogonales, de ces mêmes endroits 44 et 46, dans ce même plan transversal, lorsque le tuyau 16 est dans sa position P₂. Les endroits 44 et 46 sont choisis pour que l'écart entre les distances d₂ et d₁ soit au moins supérieur à 0,1d₂ et, de préférence, supérieur à 0,4d₂ ou 0,6d₂. A cet effet, ici, les endroits 44 et 46 sont situés sur des côtés du tuyau 16 diamétralement opposés. Sur la figure 2, les endroits 44 et 46 sont situés, respectivement, en haut et en bas de la partie centrale 18. Sur cette figure 2, les endroits 44 et 46 sont représentés par des points. Toutefois, ces endroits 44 et 46 ne sont pas nécessairement ponctuels. Dans ce cas, la distance entre les projections orthogonales des endroits 44 et 46 est mesurée entre les barycentres de chacune des projections orthogonales de ces endroits sur le plan transversal. Le barycentre d'une projection orthogonale est calculé en affectant le même coefficient de pondération à chaque point de cette projection. Ici, les endroits 44 et 46 s'étendent sur toute la longueur, respectivement, des portions 40 et 42 de la périphérie de la spire 22. La longueur des portions 40 et 42 est typiquement inférieure au quart ou à 1/5-ième ou 1/10-ième du périmètre intérieur total de la spire 22.

Ici, chaque liaison mécanique entre une portion 40, 42 et un endroit 44, 46 est, par exemple, un point de colle. Grâce à cela, quand la section du tuyau 16 se déforme, la spire 22 se déforme également, ce qui modifie sa surface transversale, et donc l'inductance propre L de la bobine 20.

Entre les portions 40 et 42, la spire 22 comporte deux portions libres 48 et 50 disposées chacune d'un côté respectif d'un plan vertical passant par l'axe 17. Les portions 48 et 50 sont séparées de la périphérie extérieure du tuyau 16 par des jeux, respectivement, 52 et 54. Ici, ces jeux sont des espaces vides de matière solide situés entre la périphérie extérieure du tuyau 16 et chacune des portions 48 et 50.

Ces jeux 52, 54 permettent à la spire 22 de se déformer en flexion et de limiter la taille des portions 40, 42 et donc de transmettre à la spire 22 uniquement les déplacements des endroits 44 et 46 du tuyau 16. Ces jeux 52, 54 permettent aussi d'éviter que les contraintes mécaniques de la paroi du tuyau provoquent des efforts en tension (traction ou compression) sur le matériau de la spire 22. Par exemple, le tuyau 16 peut se dilater lorsqu'il se déforme de la position P₁ vers la position P₂ de sorte que le périmètre de sa section transversale est plus grand dans la position P₂ que dans la position P₁. À cause de la présence des jeux 52 et 54, cette augmentation du périmètre de la section transversale du tuyau 16 ne crée pas une contrainte supplémentaire en tension sur la spire 22, ce qui évite une non linéarité des mesures ou une rupture prématurée de la spire 22. Par exemple, la plus grande largeur des jeux 52 et 54 dans la direction X est supérieure à un vingtième ou un dixième ou un cinquième du périmètre intérieur de la spire 22.

Dans ce mode de réalisation, chaque spire est formée par un brin supérieur 58 et un brin inférieur 60. Ces brins 58, 60 se rejoignent au niveau d'une arête plane 62 qui s'étend dans un plan horizontal XZ contenant l'axe 17. Par la suite, la direction Z est la direction horizontale parallèle à l'axe 17.

Le brin 58 est entièrement situé au-dessus de ce plan XZ. Le brin 60 est entièrement situé en dessous de ce même plan. Dans la position P₂, l'angle entre les projections orthogonales des brins 58 et 60, dans un plan vertical perpendiculaire à l'axe 17, au niveau de l'arête 62, est par exemple inférieur à 120° et, de préférence, inférieure à 90° ou 45°.

Tous les brins 58 et 60 ont la même longueur dans ce mode de réalisation.

Du côté opposé, par rapport à l'axe 17, la jonction entre les brins supérieur et inférieur de deux spires consécutives forme également une arête plane 64 contenue dans le même plan XZ. Typiquement, à un décalage près dans la direction Z, l'arête 64 est identique à l'arête 62.

Ici, les arêtes 62 sont toutes fixées, sans aucun degré de liberté, sur un renfort rigide 68. Ce renfort est réalisé dans un matériau électriquement isolant, c'est-à-dire un matériau dont la résistivité à 20°C est, par exemple, supérieure à 10² Ω.m ou 10⁵ Ω.m ou 10¹⁵ Ω.m. Le renfort 68 se présente sous la forme d'une baguette rectiligne rigide s'étendant parallèlement à l'axe 17. Ce renfort 68 permet de maintenir l'écartement entre les brins 58, 60 d'une spire et l'écartement entre les spires 22 dans la direction Z.

De façon similaire, les arêtes 64 de toutes les spires 22 sont fixées sans aucun degré de liberté sur un même renfort 70. Par exemple, le renfort 70 est identique au renfort 68. Il est disposé par rapport au renfort 68 de manière à ce que les renforts 68 et 70 soient symétriques l'un de l'autre par rapport au plan vertical passant par l'axe 17.

La figure 3 représente la spire 22 dans le cas où le tuyau 16 est dans sa position P₁. Ici, dans la position P₁, la partie centrale 18 est complètement écrasée et plate. Dans cette position P₁, les endroits 44, 46 sont beaucoup plus rapprochés l'un de l'autre que dans la position P₂. Cela se traduit par une surface de la spire 22 beaucoup plus petite que la surface de cette même spire dans la position P₂. On comprend aussi, en comparant les figures 2 et 3, que dans ce mode de réalisation, chaque brin 58, 60 travaille en flexion entre ses extrémités ancrées au niveau des arêtes 62, 64.

La figure 4 représente plus en détail plusieurs spires 22 de la bobine 20. Comme illustré sur cette figure, le tuyau 16 passe en alternance, au-dessus d'un brin inférieur 60, puis en dessous d'un brin supérieur 58 des spires successives de la bobine 20. Plus précisément, chaque spire 22 débute en un point de départ 76 et se termine en un point d'arrivée 78 décalé, dans la direction Z par rapport à son point de départ 76. Les points de départ et d'arrivée de chaque spire 22 sont tous situés dans le plan horizontal XZ contenant l'axe 17. Le point d'arrivée 78 d'une spire 22 précédente constitue également le point de départ 76 de la spire 22 immédiatement consécutive dans la direction Z. Ici, le pas d'une spire est défini comme étant égal à la distance entre les projections orthogonales des points 76 et 78 d'une même spire sur l'axe 17. Ce pas est choisi inférieur à un vingtième ou un quarantième du périmètre intérieur de cette spire 22. Grâce à ce choix, les spires 22 sont serrées les unes sur les autres, ce qui permet d'augmenter la précision de la mesure de la pression.

Typiquement, le nombre de spires 22 est supérieur à cinq ou dix, et généralement, inférieur à cent.

Le capteur 2 comporte également :
- un conducteur 80 raccordant électriquement le point de départ 76 de la première spire 22 à une électrode du condensateur 24, et
- un conducteur 82 raccordant électriquement le point d'arrivée 78 de la dernière spire 22 à l'autre électrode du condensateur 24.

Ces conducteurs 80 et 82 sont fixés, sans aucun degré de liberté et sur toute leur longueur, sur le renfort 70. De préférence, le condensateur 24 est aussi fixé sans aucun degré de liberté sur le renfort 70.

Le fonctionnement du capteur 2 est le suivant. Lorsque la pression du fluide augmente, le tuyau 16 se déforme de sa position P₁ vers sa position P₂. Cette déformation fait varier la surface de la section transversale des spires 22 de la bobine 20. Cette modification de la surface de la section transversale des spires 22 fait varier la valeur de l'inductance propre L de la bobine 20. En parallèle, l'unité 6 produit un signal électromagnétique primaire d'une forme d'onde et d'une fréquence centrale contrôlées. Ce signal électromagnétique provoque une activité électrique induite dans le circuit résonant LC. Cette activité électrique produit un signal électromagnétique secondaire généré par la bobine 20. Ce signal électromagnétique secondaire est reçu et analysé par l'unité 6. Par exemple, cette unité 6 détermine la fréquence de résonance du circuit LC à partir de la relation entre les signaux électromagnétiques primaire et secondaire. Ensuite, à partir de cette mesure de la fréquence de résonance, l'unité 6 calcule la pression mesurée. À cet effet, elle utilise, par exemple, l'abaque préenregistré lors d'une phase de calibration.

Des simulations numériques ont permis de vérifier que la valeur de l'inductance L de la bobine 20 varie de façon importante et continue lorsque le tuyau 16 se déforme de sa position P₁ jusqu'à sa position P₂. Ces simulations valident donc le fonctionnement du capteur 2. La figure 5 représente l'évolution de la valeur de l'inductance propre L en fonction de la valeur de l'ouverture a/b du tuyau. Pour cela, on a supposé que la section transversale du tuyau 16 prend la forme d'une ellipse à périmètre constant quand il se déforme entre ses positions P₁ et P₂. L'ouverture a/b est égale au rapport de la longueur « a » du petit axe de cette ellipse sur la longueur « b » du grand axe de cette même ellipse.

Le graphe de la figure 5 a été obtenu dans les conditions suivantes :
- l'ouverture est égale à 0,1 dans la position P₁ et à 1 dans position P₂,
- le nombre de spires 22 est égal à 17, et
- le périmètre intérieur de chaque spire 22 est égal à 17 mm.

Dans ces conditions, lorsque le tuyau est dans sa position P₁, la valeur de l'inductance propre L est environ égale à 55 nH. Lorsque le tuyau 16 est dans sa position P₂, la valeur de l'inductance propre de la bobine 20 est d'environ 256 nH. Ainsi, entre les positions P₁ et P₂, la valeur de l'inductance est multipliée par plus de quatre.

La figure 6 représente un procédé de fabrication du capteur 2.

Lors d'une étape 100, le tuyau 16 est fabriqué puis fourni.

En parallèle, lors d'une étape 102, la bobine 20 est réalisée. Cette étape 102 débute par une opération 104 de réalisation, dans un plan, d'une piste électrique s'étendant continûment du point de départ 76 de la première spire 22, jusqu'au point d'arrivée 78 de la dernière spire 22 de la bobine 20. Cette piste électrique zigzague de part et d'autre de l'axe 17. À ce stade, le plan horizontal contenant cette piste électrique contient également l'axe 17. Chaque zigzag de la piste électrique forme un brin inférieur et un brin supérieur mis bout à bout. Les brins inférieur et supérieur de chaque spire sont situés dans le même plan horizontal. Ici, chacun de ces brins s'étend perpendiculairement à l'axe 17, et l'axe 17 coupe chaque brin supérieur et inférieur en son milieu. Lors de cette étape, les conducteurs 80, 82 de raccordement du condensateur 24 sont également fabriqués.

En parallèle, lors d'une opération 106, des encoches sont réalisées entre chaque paire de brins inférieur 60 et supérieur 58. Chacune de ces encoches coupe l'axe 17. La longueur de ces encoches est suffisante pour permettre le passage du tuyau 16 à l'intérieur de chacune de ces encoches.

Par exemple, les opérations 104 et 106 sont simultanément réalisées en découpant dans une plaque métallique, la projection orthogonale sur cette plaque de la bobine 20 de la figure 4. Dans ce cas, la plaque métallique présente typiquement une épaisseur supérieure à 0,05 mm ou 0,1 mm et, généralement, inférieure à 0,5 mm ou 0,3 mm.

Ensuite, lors d'une opération 107, les renforts 68 et 78 sont fabriqués, puis collés sur les arêtes 62 et 64 des spires 22.

À l'issue de l'étape 102, tous les brins des spires de la bobine 20 sont situés dans un même plan horizontal.

Ensuite, lors d'une étape 108, le tuyau 16 est inséré dans chacune des encoches de manière à passer au-dessus de chaque brin inférieur 60 et en dessous de chaque brin supérieur 58. Par exemple, la bobine 20 est préparée :
- en appliquant des contraintes opposées sur les renforts 68 et 70 pour les rapprocher l'un de l'autre suivant la direction X, et simultanément
- deux peignes viennent écarter les brins de chaque spire 22 suivant l'axe Y, les brins inférieurs vers les y négatifs, les brins supérieurs suivant les y positifs.
Puis les peignes peuvent être retirés tout en maintenant les contraintes opposées sur les renforts de manière à garder la bobine 20 ouverte, il est alors aisé de glisser le tuyau 16. Une fois le tuyau en place les contraintes opposées sur les renforts sont retirées.

La présence du tuyau 16 entre les brins supérieurs et inférieurs déforme ces brins qui sont maintenant chacun situés d'un côté respectif du plan horizontal contenant l'axe 17. Si nécessaire, lors de l'étape 108, les portions 40, 42 de chaque spire 22 sont collées, respectivement, sur les endroits 44 et 46. À l'issue de l'étape 108, on obtient la bobine 20, telle que décrite en référence aux figures 1 à 3. On notera que pour cela, le procédé décrit permet d'éviter d'avoir à bobiner un fil conducteur autour du tuyau 16.

Après l'étape 108, lors d'une étape 110, l'ensemble du tuyau 16 et de la bobine 20 obtenu est ensuite monté à l'intérieur du boîtier 4 comme décrit en référence à la figure 1.

Finalement, lors d'une étape 112, le terminal 28 équipé de l'unité 6 est fourni et associé au boîtier 4 pour obtenir le capteur 2.

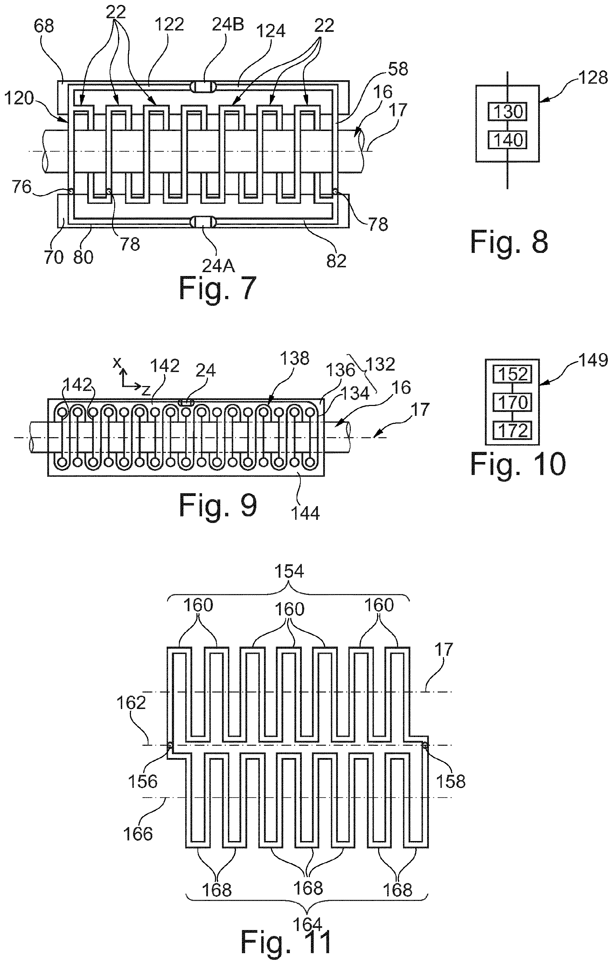

La figure 7 représente un ensemble comportant une bobine 120 montée autour du tuyau 16. La bobine 120 est identique à la bobine 20, sauf que :
- un brin supérieur 58 supplémentaire, situé après le brin inférieur de la dernière spire 22 de la bobine 20, a été ajouté pour que cette bobine 120 débute et finisse par des brins supérieurs, et
- deux conducteurs supplémentaires 122 et 124 symétriques, respectivement, des conducteurs 80 et 82 ont été ajoutés sur le renfort 68.

La présence des conducteurs 122 et 124 permet de symétriser la tenue mécanique de la bobine 120 et donc d'améliorer sa robustesse. Ici, le condensateur 24 est aussi remplacé par deux condensateurs 24A et 24B raccordés, respectivement, entre les conducteurs 80, 82 et 122, 124.

La figure 8 représente une étape 128 de réalisation d'une bobine. Cette étape 128 est apte à remplacer l'étape 102 du procédé de la figure 6. Cette étape 128 est décrite à l'aide de la figure 9.

L'étape 128 débute par une opération 130 de fourniture d'un circuit imprimé 132 souple et de gravure d'une piste électrique 134 dans la couche de métallisation supérieure de ce circuit imprimé 132. Ce circuit imprimé 132 comporte notamment un substrat souple 136 électriquement isolant, sur lequel est déposée la couche de métallisation supérieure. Par exemple, le substrat 136 est réalisé en polyimide.

La piste 134 est agencée de façon similaire à ce qui a été décrit en référence à l'étape 104 du procédé de la figure 6. En particulier, elle zigzague de part et d'autre de l'axe 17 pour former une alternance de brins supérieurs et inférieurs dans la direction Z d'une bobine 138. La piste 134 forme également des conducteurs qui raccordent électriquement chaque extrémité de la bobine 138 au condensateur 24. Par exemple, le condensateur 24 est directement monté sur le substrat 136.

Lors d'une opération 140, des encoches 142 traversant verticalement de part en part le substrat 136 sont découpées dans ce substrat 136 entre chaque paire de brins supérieur et inférieur pour permettre l'insertion du tuyau 16 le long de l'axe 17. Ici, ces encoches 142 sont des coupures rectilignes et perpendiculaires à l'axe 17. De préférence, des trous circulaires sont ménagés aux extrémités de chaque encoche 142 pour réduire le risque de déchirure du substrat 136. Chaque encoche 142 est aussi moins longue que les brins supérieur et inférieur qui l'encadrent. Ainsi, de chaque côté de l'axe 17, au-delà des extrémités de ces encoches 142, on trouve une bande du substrat 136 non découpée par ces encoches. Ces bandes s'étendent continûment parallèlement à l'axe 17. Ces bandes non découpées forment chacune un renfort 142, 144 qui remplit la même fonction que les renforts 68 et 70.

L'étape 128 se termine après l'opération 140. Ensuite, les étapes de fabrication du capteur de pression sont les mêmes que celles décrites en référence au procédé de la figure 6.

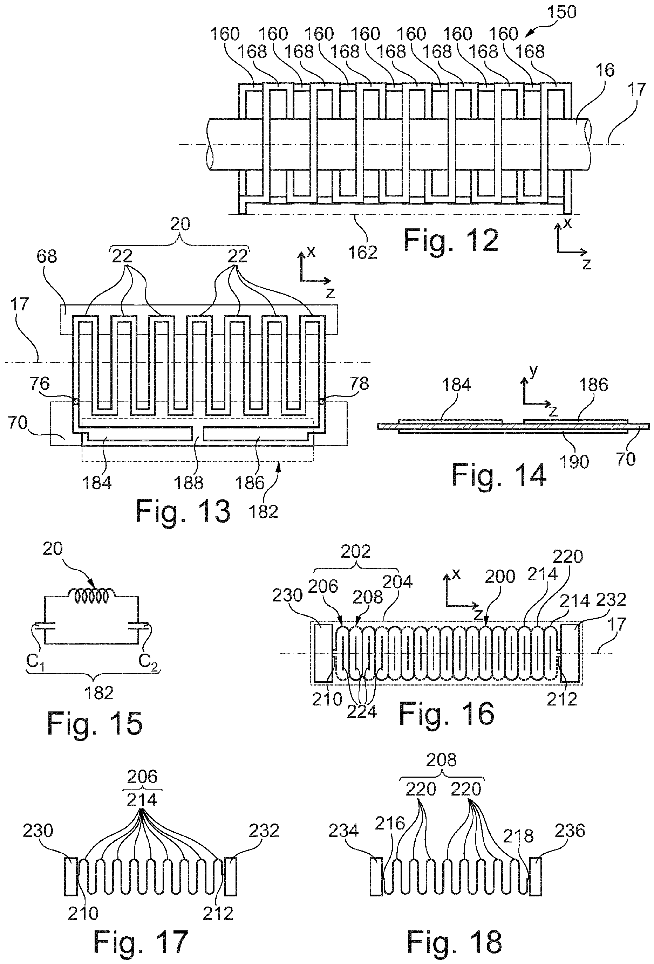

La figure 10 représente une étape 149 apte à remplacer l'étape 102. Cette variante permet de fabriquer une bobine 150 (figure 12) ayant un plus grand nombre de spires tout en conservant le même encombrement.

Lors d'une opération 152, on réalise dans un plan horizontal une piste électrique 154 (figure 11). La piste 154 zigzague de part et d'autre de l'axe 17 depuis un point de départ 156 jusqu'à un point d'arrivée 158 pour former un premier jeu de spires 160. Ici, ces spires sont, par exemple, géométriquement identiques aux spires 22. Les points 156 et 158 sont situés sur une ligne de pliage 162 parallèle à l'axe 17 et éloignée d'une distance non nulle de cet axe 17.

Lors de cette opération 152, on réalise, dans le même plan horizontal, aussi une piste électrique 164 zigzaguant de part et d'autre d'un axe 166 depuis le point 156 jusqu'au point 158. L'axe 166 est le symétrique de l'axe 17 par rapport à la ligne 162 de pliage. La piste 164 forme ainsi un second jeu de spires 168. Ici, les spires 168 sont identiques aux spires 160. De plus, elles sont agencées pour que, après le pliage du motif formé par les pistes 154 et 164, le long de la ligne 162, les brins inférieurs des spires 168 se superposent sur les brins inférieurs des spires 160. De même, après pliage, les brins supérieurs des spires 168 se superposent sur les brins supérieurs des spires 160.

Par exemple, le motif de la figure 11 est obtenu par découpage d'une plaque métallique comme lors des opérations 104 et 106 précédemment décrites.

Ensuite, lors d'une opération 170, un matériau électriquement isolant est introduit pour empêcher l'apparition de court-circuit électrique directement entre les brins des spires 160 et 168 qui sont superposés l'un sur l'autre. Par exemple, une couche de vernis isolant est déposée sur la face supérieure du motif de la figure 11.

Lors d'une opération 172, le motif de la figure 11 est plié le long de la ligne 162 pour obtenir la structure représentée dans la figure 12. Dans la bobine 150, les brins supérieurs et inférieurs des spires 168 se superposent, respectivement, sur les brins supérieurs et inférieurs des spires 160.

Ensuite, le procédé de fabrication du capteur se poursuit comme décrit en référence à la figure 6. En particulier, lors de l'étape 108, le tuyau 16 est inséré à l'intérieur de la bobine 150 en passant systématiquement au-dessus des brins inférieurs superposés et systématiquement au-dessous des brins supérieurs superposés. On obtient ainsi une bobine 150 présentant deux fois plus de spires que la bobine 20 tout en présentant le même encombrement et en utilisant la même géométrie pour chaque spire.

La figure 13 représente un ensemble comportant la bobine 20 et un condensateur 182 à la place du condensateur 24. Le condensateur 182 comporte deux électrodes supérieures 184 et 186 situées dans le plan horizontal qui contient l'axe 17 et les arêtes 62, 64 des spires 22. L'électrode 184 est directement électriquement raccordée au point de départ 76 de la première spire 22. L'électrode 186 est directement électriquement raccordée au point d'arrivée 78 de la dernière spire 22 de la bobine. Dans ce mode de réalisation, les électrodes 184 et 186 sont isolées électriquement l'une de l'autre par une séparation 188. De préférence, les électrodes 184 et 186 sont fabriquées comme les conducteurs 80 et 82 de la figure 4.

Le condensateur 182 comporte également, sur une face opposée du renfort 70, une électrode inférieure 190 (figure 14), réalisée dans un matériau électriquement bon conducteur. L'électrode 190 s'étend continûment sous les électrodes 184 et 186. Ainsi, dans ce mode de réalisation, le renfort 70 joue également le rôle de matériau diélectrique du condensateur 182. L'association des électrodes 184 et 190 forme un condensateur C₁. L'association des électrodes 186 et 190 forme un condensateur C₂. Étant donné que l'électrode 190 est commune aux condensateurs C₁ et C₂, ces condensateurs sont ici raccordés en série, comme représentés sur le schéma électrique de la figure 15 correspondant au schéma électrique de l'ensemble de la figure 13.

La figure 16 représente une bobine 200 avant l'insertion du tuyau 16 à l'intérieur de ses spires. La bobine 200 est similaire à la bobine 138 sauf qu'elle est réalisée à partir d'un circuit imprimé 202 souple double-face. Le circuit imprimé 202 comporte :
- un substrat souple 204, électriquement isolant, par exemple identique au substrat 136,
- une piste électrique supérieure 206 obtenue par gravure d'une couche de métallisation supérieure du circuit imprimé, et
- une piste électrique inférieure 208, obtenue par gravure d'une couche de métallisation inférieure du circuit imprimé.

Sur la figure 16, la piste 208 est représentée en pointillés, car elle est située sur la face inférieure du substrat 204. Les figures 17 et 18 représentent, respectivement, les pistes 206 et 208 seules.

La piste 206 s'étend, dans un plan horizontal, le long de l'axe 17 depuis un point 210 de départ jusqu'à un point 212 d'arrivée. Cette piste 206 zigzague de part et d'autre de l'axe 17 pour former un jeu de spires 214 le long de cet axe 17. Les points 210 et 212 sont situés au-dessus de l'axe 17 dans la direction verticale et dans le même plan horizontal que la piste 206. Ici, les spires 214 sont identiques à celle décrite en référence à la figure 9.

La piste 208 s'étend depuis un point de départ 216 jusqu'à un point d'arrivée 218. Les points 216 et 218 sont situés à la verticale, respectivement, des points 210 et 212 et dans le même plan que celui contenant la piste 208. La piste 208 forme un jeu de spires 220 sur la face inférieure du circuit imprimé. La piste 208 est agencée de telle sorte que sa projection orthogonale dans le plan de la piste 206 constitue le symétrique de la piste 206 par rapport à la projection orthogonale de l'axe 17 dans ce même plan. Dans ces conditions, de façon similaire à ce qui a été décrit en référence aux figures 10 à 12, les brins inférieurs des spires 214 et 220 se superposent les uns au-dessus des autres dans la direction verticale. De même, les brins supérieurs des spires 214 et 220 se superposent les uns au-dessus des autres dans la direction verticale.

Des encoches 224, traversant verticalement de part en part le substrat 204, sont réalisées entre chaque paire de brins inférieur et supérieur de chaque spire 214, 220. Chaque encoche 224 permet le passage du tuyau 16. Ces encoches 224 sont par exemple identiques aux encoches 142. On notera qu'une même encoche 224 sépare à la fois les brins supérieur et inférieur d'une spire 214 et les brins supérieur et inférieur d'une spire 220.

Les points 210 et 212 sont électriquement raccordés, respectivement, à deux électrodes supérieures 230 et 232. Ici, ces électrodes 230 et 232 sont obtenues par gravure de la couche de métallisation supérieure et sont donc situées dans le même plan horizontal que la piste 206. De même, les points 216 et 218 sont électriquement raccordés, respectivement, à deux électrodes inférieures 234 et 236. Ces électrodes inférieures 234 et 236 sont obtenues par gravure de la couche de métallisation inférieure et sont donc situées dans le même plan horizontal que la piste 208. Ces électrodes 234 et 236 sont situées à la verticale, respectivement, des électrodes 230 et 232, et sont séparées de ces dernières par le substrat 204. L'association des électrodes 230 et 234 forme un condensateur C₁ et l'association des électrodes 232 et 236 forme un condensateur C₂. Ainsi, le schéma électrique correspondant à l'ensemble de la bobine 200 et des condensateurs C₁ et C₂ est structurellement le même que celui de la figure 15.

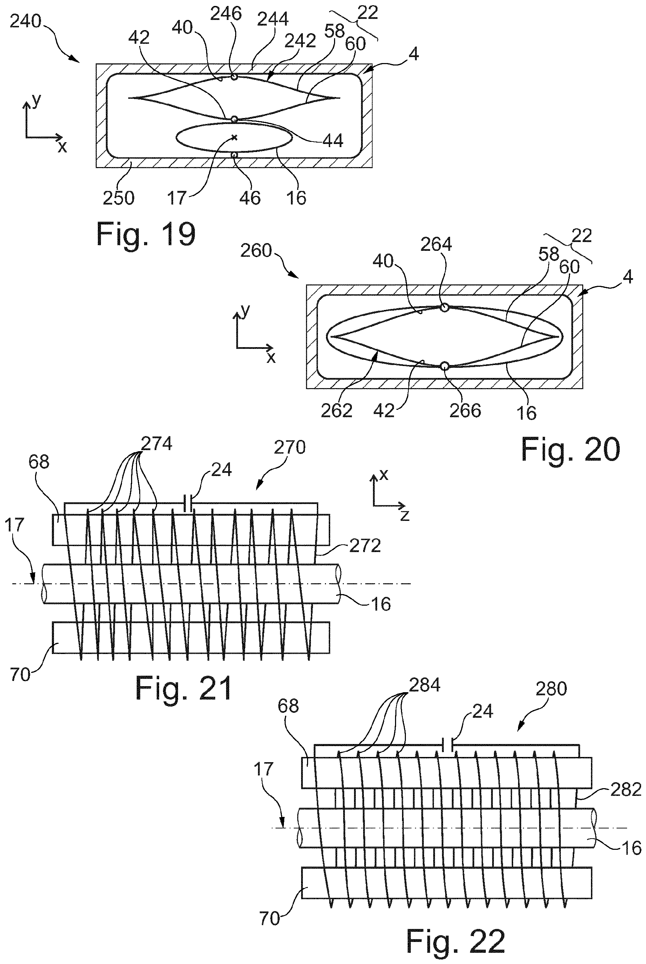

La figure 19 représente un capteur 240 identique au capteur 2 sauf que la bobine 20 est remplacée par une bobine 242. Pour simplifier la figure 19, seul le boîtier 4 et son contenu est représenté. De plus, sur cette figure, seule une spire de la bobine 242 est visible.

Ici, la bobine 242 est identique à la bobine 20 sauf qu'elle est fixée entre le tuyau 16 et une butée supérieure 244. Par la suite, on utilise donc les mêmes références numériques que celles définies pour la bobine 20 pour désigner les mêmes éléments dans la bobine 242. Ici, la butée 244 forme également la paroi supérieure du boîtier 4. La portion 40 de chaque spire 22 de la bobine 242 est fixée directement, sans aucun degré de liberté, à la butée 244 en un endroit 246. La portion 42 est fixée directement, sans aucun degré de liberté, sur l'endroit 44 du tuyau 16 et non pas sur l'endroit 46 comme dans les précédents modes de réalisation.

L'endroit 46 du tuyau 16 est raccordé mécaniquement et indirectement, sans aucun degré de liberté, à la portion 40 de la spire. A cet effet, l'endroit 46 est fixé, sans aucun degré de liberté, sur une butée inférieure, ici la paroi inférieure 250 du boîtier 4, qui est elle-même mécaniquement raccordée, sans degré de liberté, à la butée 244 par l'intermédiaire des parois verticales de ce boîtier. Ainsi, dans ce mode de réalisation, la liaison mécanique entre la portion 40 de la spire 22 et l'endroit 46 du tuyau comporte :
- la fixation sans aucun degré de liberté entre la portion 40 et l'endroit 246,
- la fixation sans aucun degré de liberté entre l'endroit 246 et la paroi 250,
- la butée 244, et
- la paroi inférieure 250 et les parois verticales du boîtier.

Les fixations sans aucun degré de liberté sont, par exemple, réalisées à l'aide d'un point de colle.

De préférence, les endroits 40, 42 et 246 sont situés dans un même plan vertical passant par l'axe 17 pour maximiser la variation de la surface transversale des spires 22 en réponse à une déformation du tuyau 16.

Dans ce mode de réalisation, les spires 22 ne sont pas enroulées autour du tuyau 16 de sorte que l'étape 108 peut être omise lors de la fabrication du capteur 240.

Le fonctionnement du capteur 240 se déduit du fonctionnement du capteur 2, sauf que, quand la pression du fluide diminue, la surface des spires 22 augmente et l'inductance propre de la bobine 242 augmente. À l'inverse, quand la pression du fluide augmente, la surface des spires 22 diminue et la valeur de l'inductance propre de la bobine 242 diminue.

La figure 20 représente un capteur 260 identique au capteur 2 sauf que la bobine 20 est remplacée par une bobine 262. Comme sur la précédente figure, pour simplifier, seul le boîtier 4 et son contenu sont représentés et seule une spire de la bobine 262 est visible.

La bobine 262 est identique à la bobine 20 sauf qu'elle est située entièrement à l'intérieur de la partie centrale 18 du tube 16 et non pas autour de ce tube 16. Dès lors, la portion 40 de chaque spire 22 de la bobine 262 est directement fixée, sans aucun degré de liberté, à un endroit 264 de la face intérieure du tuyau 16. La portion 42 de chaque spire 22 est également fixée, sans aucun degré de liberté, à un endroit 266 la face intérieure du tuyau 16. Les endroits 264 et 266 sont diamétralement opposés.

Le fonctionnement du capteur 260 se déduit du fonctionnement du capteur 2.

La figure 21 représente une bobine 270 identique à la bobine 20 sauf que les spires 22 sont obtenues en déposant un fil 272 en matériau conducteur sur les renforts 68 et 70. Par exemple, le fil 272 est un fil de cuivre. Ce fil 272 zigzague entre les renforts 68 et 70 en avançant dans la direction Z pour former un jeu de spires 274.

Le fil 272 est déposé sur la face supérieure de chaque renfort 68, 70, et fixé sans aucun degré de liberté, sur cette face supérieure. Par exemple, les arêtes des spires 274 sont collées sur les renforts 68 et 70. Entre les renforts 68, 70, le fil 272 est suspendu et libre. Les renforts 68 et 70 s'étendent parallèlement à l'axe 17 et sont espacés l'un de l'autre par une distance suffisamment grande pour recevoir le tuyau 16. Ensuite, le tuyau 16 est inséré à l'intérieur des spires 274 comme décrit en référence à l'étape 108. C'est par exemple la rigidité du fil 272 qui rend négligeable la déformation des spires 274 sous leur propre poids ou sous le poids des renforts 68 et 78. C'est donc également la rigidité du fil 272 qui maintient un jeu entre les renforts 68 et 70 dans la position P₁ du tuyau.

La figure 22 représente une bobine 280, identique à la bobine 270, sauf que le fil 272 est remplacé par un fil 282. Le fil 282 est identique au fil 272 sauf qu'il est enroulé autour des renforts 68 et 70 pour former un jeu de spires 284. Dans ce mode de réalisation, le brin inférieur de chaque spire 284 est fixé, sans aucun degré de liberté, à chacune de ses extrémités, sur une face inférieure, respectivement, des renforts 68 et 70. À l'inverse, le brin supérieur de chaque spire 284 est fixé, sans aucun degré de liberté, à chacune de ses extrémités, sur la face supérieure, respectivement, des renforts 68 et 70.

Dans ce mode de réalisation, le tuyau peut être inséré à l'intérieur des spires 284 après leur fabrication. Toutefois, il est aussi possible de placer le tuyau 16 entre les renforts 68 et 70 et seulement ensuite, d'enrouler le fil 282 autour des renforts 68, 70 et, en même temps, autour du tuyau 16. Dans ce dernier cas, les brins de chaque spire 284 sont fixés, par exemple, à chacune de leurs extrémités sur des faces correspondantes des renforts 68 et 70.

De nombreux autres modes de réalisation sont possibles. Par exemple, les capteurs de pression décrits peuvent être utilisés pour mesurer la pression d'un gaz circulant à l'intérieur du tuyau 16 ou d'un liquide circulant à l'intérieur de ce même tuyau. Les capteurs précédemment décrits fonctionnent également même si le fluide situé à l'intérieur du tuyau 16 ne circule pas, c'est-à-dire qu'il est stationnaire. Ils sont aussi utilisables pour mesurer une pression du fluide inférieur à la pression extérieure, c'est-à-dire inférieure à la pression à l'intérieur du boîtier 4.

En variante, le boîtier 4 est étanche à l'air et l'on réalise le vide à l'intérieur du boîtier 4. Dans ce cas, le capteur est un capteur de pression absolue.

En variante, les renforts latéraux 68 et 70 peuvent être omis. Il est aussi possible d'omettre un seul des renforts 68 et 70 tout en conservant l'autre. En variante, on peut aussi prévoir d'utiliser plus de deux renforts.

L'inductance propre de la bobine peut être mesurée différemment et, en particulier, sans recours à la formation d'un circuit LC résonnant. Par exemple, un mesureur d'inductance raccordé électriquement à chaque extrémité de la bobine peut être utilisé. Typiquement, un tel mesureur applique un signal électrique alternatif de fréquence connue dans la bobine puis l'inductance propre de cette bobine est calculée à partir de la partie imaginaire du rapport de la tension aux bornes de la bobine sur le courant circulant entre ces bornes. Ainsi, l'unité de mesure et de calcul peut aussi être électriquement connectée au boîtier 4 par une liaison filaire.

D'autres modes de réalisation de l'unité 6 de mesure et de calcul sont également décrits, par exemple, dans la demande WO9956614.

Si le tuyau souple se déforme en conservant systématiquement un périmètre constant pour sa section transversale, il n'est pas nécessaire de prévoir un jeu entre les spires 22 et ce tuyau. Dans ce cas, les jeux 52 et 54 peuvent être omis. On peut alors bobiner les spires de la bobine directement sur le tuyau sans laisser de jeu entre ces spires et la surface extérieure du tuyau. On peut aussi incorporer entièrement les spires de la bobine à l'intérieur des parois du tuyau.

Dans une autre variante, le fil conducteur est capable de s'étirer et, en alternance, de se rétrécir de façon élastique en réponse aux déformations du tuyau. Dans ce cas, le jeu entre les spires et le tuyau peut aussi être omis. Par exemple, le fil conducteur est réalisé dans un matériau élastique. On peut aussi conférer ces propriétés élastiques au fil en le frisant. Par exemple, dans ce dernier cas, le fil est un fil spiralé qui s'enroule sur lui-même pour former des boucles successives dans une direction longitudinale à la manière d'un ressort qui s'étend dans cette direction longitudinale. Le pas entre ces boucles est dix ou vingt fois inférieur au pas des spires de la bobine. Ensuite, le fil spiralé est, par exemple, utilisé comme décrit en référence aux figures 21 et 22. Le fil spiralé peut être remplacé par un fil ondulé, c'est-à-dire un fil qui ondule, dans un plan, de part et d'autre de la direction longitudinale. Dans ce cas aussi, la période des ondulations du fil est dix ou vingt fois inférieure au pas des spires de la bobine.

Les jeux 52, 54 peuvent être remplis d'un matériau solide beaucoup plus souple que le matériau utilisé pour réaliser le tuyau 16, tel qu'une mousse.

Le nombre de spires de la bobine peut être aussi petit que un. Il peut également être supérieur à cent.

Le conduit 3 peut directement être inséré à l'intérieur de la bobine. Dans ce cas, les manchons 12, 14 sont omis et le tuyau 16 est formé par la partie du conduit 3 qui est mécaniquement raccordée aux spires de la bobine.

Si les spires de la bobine sont pré-contraintes pour exercer en permanence une force de rappel sur le tuyau souple de sa position P₂ vers sa position P₁, alors, les points de colle peuvent être omis. En effet, dans ce cas, les brins supérieur et inférieur de chaque spire sont sollicités en permanence contre, respectivement, les endroits 44 et 46 de la partie centrale du tuyau souple ce qui peut suffire à fixer les portions 40 et 42, sans degré de liberté, à ces endroits respectifs du tuyau. Dans ce cas, les liaisons mécaniques entre les endroits 44, 46 et les portions 40, 42 sont réalisées par simple mise en contact compressif de la portion 40, 42 sur l'endroit correspondant 44, 46.

Les portions 40 et 42 fixées à des endroits différents sur le tuyau 16 ne sont pas nécessairement disposées de façon diamétralement opposée par rapport à l'axe d'enroulement de la spire. Par exemple, elles peuvent aussi être disposées, dans un plan vertical, à 90° l'une de l'autre même si ce n'est pas le mode de réalisation préféré. En fait, il suffit que dans le plan vertical, il existe un décalage angulaire, autour de l'axe d'enroulement, entre les positions de ces portions 40 et 42 pour que le capteur commence à fonctionner. De préférence, ce décalage angulaire est égal à 180° à plus ou moins 90° près et, de préférence, à plus ou moins 45° ou 20° près. La position d'une portion de spire dans le plan vertical correspond à la position du barycentre de la projection orthogonale de cette portion de spire dans ce plan vertical en affectant à chaque point de cette projection le même coefficient de pondération.

Chaque portion 40, 42 peut être fixées, sans degré de liberté, à un endroit respectif du tuyau 16:
a) soit par une liaison mécanique directe comme dans les modes de réalisation des figures 1 et 20,
b) soit par une liaison mécanique indirecte qui comprend en plus une pièce mécanique intermédiaire rigide fixée, sans aucun degré de liberté, d'un côté à la portion de la spire et, d'un autre côté, à l'endroit correspondant sur le tuyau.

Le cas b) ci-dessus est illustré ici par le raccordement de la portion 40 de la spire 22 à l'endroit 46 dans le mode de réalisation de la figure 19. Dans le mode de réalisation de la figure 19, la pièce mécanique intermédiaire est le boîtier 4. Dans un mode de réalisation particulier, à la fois les portions 40 et 42 sont reliées, par des liaisons mécaniques indirectes respectives, à des endroits respectifs du tuyau 16.

Le nombre de portions de la spire fixées, sans degré de liberté, sur le tuyau peut être supérieur à trois.

Les endroits 44, 46 du tuyau 16, sur lesquels les portions 40, 42 sont fixées, ne sont pas nécessairement situés sur des côtés diamétralement opposés par rapport à l'axe 17. Pour que le capteur commence à fonctionner, il suffit qu'il existe un décalage angulaire, autour de l'axe 17, entre les positions de ces endroits. Typiquement, ce décalage angulaire est égal à 180° à plus ou moins 90° près et, de préférence, à plus ou moins 45° ou 20° près. La position d'un endroit dans le plan vertical correspond à la position du barycentre de la projection orthogonale de cet endroit dans ce plan vertical. Le barycentre est mesuré comme précédemment indiqué.

La forme de la projection orthogonale des spires des bobines dans un plan horizontal peut être différente de celle précédemment décrite. Par exemple, cette projection orthogonale peut être pointue au niveau de l'arête ou au contraire arrondie au niveau des arêtes 62, 64. Il n'est pas non plus nécessaire que toutes les spires de la même bobine aient exactement la même forme. Par exemple en variante, la forme des spires 22 et des spires 138 est mélangée dans une même bobine. Toutefois, il doit exister un espace suffisant entre les brins inférieur et supérieur pour ménager l'encoche à l'intérieur de laquelle doit être inséré le tuyau.

Au lieu d'être gravées, les pistes électriques peuvent être déposées sur un substrat isolant.

Il n'est pas nécessaire que les brins supérieurs et inférieurs des spires 168 se superposent exactement sur les brins supérieurs et inférieurs des spires 160 correspondantes après pliage. En fait, il suffit qu'après pliage, il reste suffisamment d'espace entre les brins supérieur et inférieur de chaque spire 160 ,168 pour former l'encoche à l'intérieur de laquelle le tuyau est inséré. Par exemple, en variante, il existe un léger décalage entre les brins supérieurs des spires 160 et 168 et les brins inférieurs des spires 160 et 168 après pliage. Toutefois, les brins supérieurs des spires 168 sont agencés de manière à ce que, après le pliage, ils soient plus proches des brins supérieurs des spires 160 que des brins inférieurs des spires 160. Il est en de même pour l'agencement des brins inférieurs des spires 168 qui doivent être plus proches, après pliage, des brins inférieurs des spires 160 que des brins supérieurs des spires 160.

La butée 244 ou 250 peut prendre une autre forme que celle d'une paroi pleine. Par exemple, en variante, cette butée est une tige rigide qui s'étend parallèlement à l'axe 17 et à une distance constante de cet axe 17. Dans tous les cas, ces deux butées sont maintenues à une distance fixe l'une de l'autre.

Dans une variante du capteur 4 :
- les portions 40, 42 de la spire sont raccordées mécaniquement sans degré de liberté uniquement, respectivement, aux endroits 44 et 46 du tuyau comme décrit précédemment, et.
- la portion 42 est, en plus, directement fixée sans degré de liberté sur la paroi 250 du boîtier 4.

## Revendications

1. Capteur de pression d'un fluide, ce capteur comportant :
- un tuyau souple (16) s'étendant autour et le long d'un axe central (17), ce tuyau étant apte à contenir le fluide dont la pression doit être mesurée et à se déformer sous l'effet de la pression exercée par le fluide, entre :
• une première position déformée pour une première pression exercée par le fluide, dans cette première position le tuyau présentant un premier et un second endroits de sa périphérie différents dont les projections orthogonales dans un plan perpendiculaire à l'axe central sont séparées par une distance d₁, et
• une seconde position déformée pour une seconde pression exercée par le fluide supérieure à la première pression, dans la seconde position les projections orthogonales des premier et second endroits dans le plan perpendiculaire à l'axe central sont séparées par une distance d₂, l'écart entre les distances d₂ et d₁ étant au moins supérieur à 0,1d₂,
- une bobine (20 ; 120 ; 138 ; 150 ; 200 ; 262 ; 270 ; 280) dont l'inductance propre varie en fonction de la pression du fluide à l'intérieur du tuyau souple, cette bobine comportant au moins une spire (22 ; 160, 168 ; 214, 220 ; 274 ; 284) enroulée autour d'un axe (17) d'enroulement de la bobine confondu avec l'axe central du tuyau, ladite au moins une spire comportant :
• une première portion (40) de sa périphérie mécaniquement raccordée au premier endroit de la périphérie du tuyau par une première liaison mécanique qui relie sans degré de liberté cette première portion à ce premier endroit, et
• une deuxième portion (42) de sa périphérie, distincte de la première portion, mécaniquement raccordée au deuxième endroit de la périphérie du tuyau par une seconde liaison mécanique, distincte de la première liaison mécanique, qui relie sans degré de liberté cette deuxième portion à ce deuxième endroit de manière à ce que la surface transversale de cette spire varie en fonction de la déformation du tuyau,
- une unité (6) de calcul de la pression du fluide en fonction de l'inductance propre de la bobine,
**caractérisé en ce que** la spire comporte une troisième (48) et une quatrième (50) portions libres situées entre les première et seconde portions et chacune d'un côté respectif de l'axe centrale du tuyau, ces troisième et quatrième portions libres étant chacune séparée du tuyau souple par un jeu (52, 54).

2. Capteur selon la revendication 1, dans lequel ladite au moins une spire (22 ; 160, 168 ; 214, 220 ; 274 ; 284) est enroulée autour du tuyau souple.

3. Capteur selon la revendication 2, dans lequel le capteur comporte :
- deux renforts (68, 70) situés entre le tuyau et, respectivement, les troisième (48) et quatrième (50) portions de chaque spire, chaque renfort étant réalisé dans un matériau électriquement isolant et s'étendant parallèlement à l'axe central et étant séparé du tuyau par le jeu, et
- un fil (282) en matériau électriquement conducteur enroulé autour de ces deux renforts et du tuyau souple pour former ladite au moins une spire (284) de sorte que cette spire entoure ces deux renforts et le tuyau souple.

4. Capteur selon la revendication 2 ou 3, dans lequel la largeur maximale du jeu dans la première position est supérieure à un vingtième du périmètre intérieur de la spire.

5. Capteur selon la revendication 1, dans lequel ladite au moins une spire est située à l'intérieur du tuyau souple.

6. Capteur selon l'une quelconque des revendications précédentes, dans lequel chaque spire comporte un brin supérieur (58) situé au-dessus de l'axe d'enroulement, et un brin inférieur (60), situé en dessous de l'axe d'enroulement, le brin supérieur rejoignant le brin inférieur au niveau d'une arête (62, 64) plane s'étendant dans un plan, toutes les arêtes planes de toutes les spires de la bobine s'étendant dans le même plan.

7. Capteur selon la revendication 6, dans lequel le capteur comporte un circuit imprimé (202) comportant :
- un substrat (204) électriquement isolant s'étendant principalement dans le plan contenant les arêtes,
- une première piste électrique (206) disposée sur une première face du substrat, cette première piste électrique formant les brins supérieur et inférieur de chaque spire,
- une première électrode (230, 232) disposée sur la première face, et
- une seconde électrode (234, 236) disposée sur une seconde face, opposée à la première face, du substrat, cette seconde électrode étant située en vis-à-vis de la première électrode pour former, avec la première électrode, un condensateur électriquement raccordé à la bobine.

8. Capteur selon l'une quelconque des revendications précédentes, dans lequel le capteur comporte au moins un renfort électriquement isolant (68, 70) dont le module de Young est au moins deux fois supérieur au module de Young du tuyau souple, ce renfort s'étendant continûment parallèlement à l'axe central et chaque spire étant fixée sans aucun degré de liberté à ce renfort.

9. Capteur selon l'une quelconque des revendications précédentes, dans lequel la bobine (20 ; 120 ; 138 ; 150 ; 200 ; 262 ; 270 ; 280) comporte plusieurs spires immédiatement consécutives s'étendant chacune d'un point (76) de départ jusqu'à un point (78) d'arrivée situés dans un même plan après avoir effectué exactement un tour complet autour de l'axe d'enroulement (17), ce plan contenant l'axe d'enroulement, le point d'arrivée d'une spire constituant le point de départ de la spire immédiatement consécutive, le pas de chaque spire étant inférieur à un vingtième du périmètre intérieur de cette spire mesuré entre ses points de départ et d'arrivée, le pas d'une spire étant la distance entre les projections orthogonales de ses points d'arrivée et de départ sur l'axe d'enroulement.

10. Capteur selon l'une quelconque des revendications précédentes, dans lequel les projections orthogonales, dans un plan perpendiculaire à l'axe d'enroulement, des première et deuxième portions (40, 42) de la spire sont disposées l'une en face de l'autre et de chaque côté de l'axe d'enroulement.

11. Procédé de fabrication d'un capteur de pression conforme à l'une quelconque des revendications précédentes, ce procédé comportant :
a) la fourniture (100) d'un tuyau souple s'étendant autour et le long d'un axe central, ce tuyau étant apte à contenir le fluide dont la pression doit être mesurée et à se déformer sous l'effet de la pression exercée par le fluide, entre :
• une première position déformée pour une première pression exercée par le fluide, dans cette première position le tuyau présentant un premier et un second endroits de sa périphérie différents dont les projections orthogonales dans un plan perpendiculaire à l'axe central sont séparées par une distance d₁, et
• une seconde position déformée pour une seconde pression exercée par le fluide supérieure à la première pression, dans la seconde position les projections orthogonales des premier et second endroits dans le plan perpendiculaire à l'axe central sont séparées par une distance d₂, l'écart entre les distances d₂ et d₁ étant au moins supérieur à 0,1d₂,
b) la réalisation (102 ; 128 ; 152, 170, 172) d'une bobine dont l'inductance propre varie en fonction de la pression du fluide à l'intérieur du tuyau souple, cette bobine comportant au moins une spire enroulée autour d'un axe d'enroulement de la bobine confondu avec l'axe central du tuyau, et :
• une première portion de la périphérie de ladite au moins une spire est mécaniquement raccordée au premier endroit de la périphérie du tuyau par une première liaison mécanique qui relie sans degré de liberté cette première portion à ce premier endroit, et
• une deuxième portion de la périphérie de ladite au moins une spire, distincte de la première portion, est mécaniquement raccordée au deuxième endroit de la périphérie du tuyau par une seconde liaison mécanique, distincte de la première liaison mécanique, qui relie sans degré de liberté cette deuxième portion à ce deuxième endroit de manière à ce que la surface transversale de cette spire varie en fonction de la déformation du tuyau,
c) la fourniture (112) d'une unité de calcul de la pression du fluide en fonction de l'inductance propre de la bobine,
**caractérisé en ce que**, lors de l'étape b), une troisième et une quatrième portions libres de la spire, situées entre les première et seconde portions, sont chacune agencées d'un côté respectif de l'axe centrale du tuyau et chacune séparées du tuyau souple par un jeu.

12. Procédé selon la revendication 11, dans lequel l'étape b) comprend :
- la réalisation (104 ; 130 ; 152) d'une piste électrique conductrice s'étendant dans un plan contenant l'axe d'enroulement, depuis un point de départ jusqu'à un point d'arrivée contenus dans ce plan, en zigzaguant de part et d'autre de l'axe d'enroulement, cette piste électrique définissant ainsi, en allant du point de départ vers le point d'arrivée, une succession de brins Bᵢ immédiatement consécutifs et bout à bout, chaque brin Bᵢ s'étendant de part et d'autre de l'axe d'enroulement et coupant cet axe d'enroulement en un seul endroit, où l'indice i est un numéro d'ordre de brin dans la succession de brins en partant du point de départ,
- la réalisation d'encoches (106 ; 140) entre les brins Bᵢ successifs, chaque encoche coupant l'axe d'enroulement et étant apte à recevoir le tuyau souple, et
- l'insertion (108) du tuyau souple dans les encoches, le long de l'axe d'enroulement, en passant au-dessus du brin B₁ puis en dessous du brin B₂, puis au-dessus du brin B₃, et ainsi de suite jusqu'au dernier brin de la succession de brins.

## Patentansprüche

1. Drucksensor für ein Fluid, wobei dieser Sensor umfasst:
- einen Schlauch (16), der sich um eine und entlang einer Mittelachse (17) erstreckt, wobei dieser Schlauch geeignet ist, das Fluid zu enthalten, dessen Druck gemessen werden soll, und sich unter der Einwirkung des von dem Fluid ausgeübten Drucks zu verformen zwischen:
• einer ersten verformten Position für einen von dem Fluid ausgeübten ersten Druck, wobei der Schlauch in dieser ersten Position eine erste und eine zweite Stelle seines Umfangs aufweist, die verschieden sind und deren orthogonale Projektionen in einer zur Mittelachse senkrechten Ebene durch einen Abstand d₁ getrennt sind, und
• einer zweiten verformten Position für einen von dem Fluid ausgeübten zweiten Druck, der größer als der erste Druck ist, wobei in der zweiten Position die orthogonalen Projektionen der ersten und der zweiten Stelle in der zur Mittelachse senkrechten Ebene durch einen Abstand d₂ getrennt sind, wobei die Abweichung zwischen den Abständen d₂ und d₁ wenigstens größer als 0,1 d₂ ist,
- eine Spule (20; 120; 138; 150; 200; 262; 270; 280), deren Eigeninduktivität in Abhängigkeit vom Druck des Fluids im Inneren des Schlauches variiert, wobei diese Spule wenigstens eine Windung (22; 160, 168; 214, 220; 274; 284) aufweist, die um eine Wicklungsachse (17) der Spule gewickelt ist, die mit der Mittelachse des Schlauches zusammenfällt, wobei die wenigstens eine Windung aufweist:
• einen ersten Abschnitt (40) ihres Umfangs, der an die erste Stelle des Umfangs des Schlauches durch eine erste mechanische Verbindung mechanisch angeschlossen ist, welche diesen ersten Abschnitt mit dieser ersten Stelle ohne Freiheitsgrad verbindet, und
• einen vom ersten Abschnitt verschiedenen zweiten Abschnitt (42) ihres Umfangs, der an die zweite Stelle des Umfangs des Schlauches durch eine von der ersten mechanischen Verbindung verschiedene zweite mechanische Verbindung mechanisch angeschlossen ist, welche diesen zweiten Abschnitt mit dieser zweiten Stelle ohne Freiheitsgrad derart verbindet, dass die Querschnittsfläche dieser Windung in Abhängigkeit von der Verformung des Schlauches variiert,
- eine Einheit (6) zur Berechnung des Drucks des Fluids in Abhängigkeit von der Eigeninduktivität der Spule,
**dadurch gekennzeichnet, dass** die Windung einen dritten (48) und einen vierten (50) freien Abschnitt aufweist, die zwischen dem ersten und zweiten Abschnitt und jeweils auf einer jeweiligen Seite der Mittelachse des Schlauches angeordnet sind, wobei dieser dritte und vierte freie Abschnitt jeweils durch einen Zwischenraum (52, 54) von dem Schlauch getrennt sind.

2. Sensor nach Anspruch 1, wobei die wenigstens eine Windung (22; 160, 168; 214, 220; 274; 284) um den Schlauch gewickelt ist.

3. Sensor nach Anspruch 2, wobei der Sensor umfasst:
- zwei Verstärkungen (68, 70), die zwischen dem Schlauch und dem dritten (48) bzw. vierten (50) Abschnitt jeder Windung angeordnet sind, wobei jede Verstärkung aus einem elektrisch isolierenden Material hergestellt ist und sich parallel zur Mittelachse erstreckt und durch den Zwischenraum von dem Schlauch getrennt ist, und
- einen Draht (282) aus elektrisch leitendem Material, der um diese zwei Verstärkungen und den Schlauch gewickelt ist, um die wenigstens eine Windung (284) zu bilden, derart, dass diese Windung diese zwei Verstärkungen und den Schlauch umgibt.

4. Sensor nach Anspruch 2 oder 3, wobei die maximale Breite des Zwischenraums in der ersten Position größer als ein Zwanzigstel des Innenumfangs der Windung ist.

5. Sensor nach Anspruch 1, wobei die wenigstens eine Windung im Inneren des Schlauches angeordnet ist.

6. Sensor nach einem der vorhergehenden Ansprüche, wobei jede Windung ein oberes Trum (58), das oberhalb der Wicklungsachse angeordnet ist, und ein unteres Trum (60), das unterhalb der Wicklungsachse angeordnet ist, umfasst, wobei das obere Trum an einer flachen Kante (62, 64), die sich in einer Ebene erstreckt, auf das untere Trum trifft, wobei sich alle flachen Kanten aller Windungen der Spule in derselben Ebene erstrecken.

7. Sensor nach Anspruch 6, wobei der Sensor eine Leiterplatte (202) umfasst, welche umfasst:
- ein elektrisch isolierendes Substrat (204), das sich hauptsächlich in der die Kanten enthaltenden Ebene erstreckt,
- eine erste Leiterbahn (206), die auf einer ersten Seite des Substrats angeordnet ist, wobei diese erste Leiterbahn das obere und untere Trum jeder Windung bildet,
- eine erste Elektrode (230, 232), die auf der ersten Seite angeordnet ist, und
- eine zweite Elektrode (234, 236), die auf einer der ersten Seite gegenüberliegenden zweiten Seite des Substrats angeordnet ist, wobei sich diese zweite Elektrode gegenüber der ersten Elektrode befindet, um mit der ersten Elektrode einen Kondensator zu bilden, der mit der Spule elektrisch verbunden ist.

8. Sensor nach einem der vorhergehenden Ansprüche, wobei der Sensor wenigstens eine elektrisch isolierende Verstärkung (68, 70) umfasst, deren Elastizitätsmodul wenigstens doppelt so groß wie der Elastizitätsmodul des Schlauches ist, wobei sich diese Verstärkung durchgehend parallel zur Mittelachse erstreckt und jede Windung ohne einen Freiheitsgrad an dieser Verstärkung befestigt ist.

9. Sensor nach einem der vorhergehenden Ansprüche, wobei die Spule (20; 120; 138; 150; 200; 262; 270; 280) mehrere unmittelbar aufeinander folgende Windungen aufweist, die sich jeweils von einem Anfangspunkt (76) bis zu einem Endpunkt (78), die in ein und derselben Ebene liegen, erstrecken, nachdem sie genau eine vollständige Umrundung der Wicklungsachse (17) ausgeführt haben, wobei diese Ebene die Wicklungsachse enthält, wobei der Endpunkt einer Windung den Anfangspunkt der unmittelbar nachfolgenden Windung darstellt, wobei die Ganghöhe jeder Windung kleiner als ein Zwanzigstel des zwischen ihrem Anfangs- und ihrem Endpunkt gemessenen Innenumfangs dieser Windung ist, wobei die Ganghöhe einer Windung der Abstand zwischen den orthogonalen Projektionen ihres Anfangs- und ihres Endpunktes auf die Wicklungsachse ist.

10. Sensor nach einem der vorhergehenden Ansprüche, wobei die orthogonalen Projektionen des ersten und des zweiten Abschnitts (40, 42) der Windung in einer zur Wicklungsachse senkrechten Ebene einander gegenüberliegend und beiderseits der Wicklungsachse angeordnet sind.

11. Verfahren zur Herstellung eines Drucksensors gemäß einem der vorhergehenden Ansprüche, wobei dieses Verfahren umfasst:
a) die Bereitstellung (100) eines Schlauches, der sich um eine und entlang einer Mittelachse erstreckt, wobei dieser Schlauch geeignet ist, das Fluid zu enthalten, dessen Druck gemessen werden soll, und sich unter der Einwirkung des von dem Fluid ausgeübten Drucks zu verformen zwischen:
• einer ersten verformten Position für einen von dem Fluid ausgeübten ersten Druck, wobei der Schlauch in dieser ersten Position eine erste und eine zweite Stelle seines Umfangs aufweist, die verschieden sind und deren orthogonale Projektionen in einer zur Mittelachse senkrechten Ebene durch einen Abstand d₁ getrennt sind, und
• einer zweiten verformten Position für einen von dem Fluid ausgeübten zweiten Druck, der größer als der erste Druck ist, wobei in der zweiten Position die orthogonalen Projektionen der ersten und der zweiten Stelle in der zur Mittelachse senkrechten Ebene durch einen Abstand d₂ getrennt sind, wobei die Abweichung zwischen den Abständen d₂ und d₁ wenigstens größer als 0,1 d₂ ist,
b) die Herstellung (102; 128; 152, 170, 172) einer Spule, deren Eigeninduktivität in Abhängigkeit vom Druck des Fluids im Inneren des Schlauches variiert, wobei diese Spule wenigstens eine Windung aufweist, die um eine Wicklungsachse der Spule gewickelt ist, die mit der Mittelachse des Schlauches zusammenfällt, und:
• ein erster Abschnitt des Umfangs der wenigstens einen Windung an die erste Stelle des Umfangs des Schlauches durch eine erste mechanische Verbindung mechanisch angeschlossen wird, welche diesen ersten Abschnitt mit dieser ersten Stelle ohne Freiheitsgrad verbindet, und
• ein vom ersten Abschnitt verschiedener zweiter Abschnitt des Umfangs der wenigstens einen Windung an die zweite Stelle des Umfangs des Schlauches durch eine von der ersten mechanischen Verbindung verschiedene zweite mechanische Verbindung mechanisch angeschlossen wird, welche diesen zweiten Abschnitt mit dieser zweiten Stelle ohne Freiheitsgrad derart verbindet, dass die Querschnittsfläche dieser Windung in Abhängigkeit von der Verformung des Schlauches variiert,
c) die Bereitstellung (112) einer Einheit zur Berechnung des Drucks des Fluids in Abhängigkeit von der Eigeninduktivität der Spule,
**dadurch gekennzeichnet, dass** im Schritt b) ein dritter und ein vierter freier Abschnitt der Windung, die sich zwischen dem ersten und zweiten Abschnitt befinden, jeweils auf einer jeweiligen Seite der Mittelachse des Schlauches angeordnet werden und jeweils durch einen Zwischenraum von dem Schlauch getrennt werden.

12. Verfahren nach Anspruch 11, wobei Schritt b) umfasst:
- die Herstellung (104; 130; 152) einer Leiterbahn, die sich in einer die Wicklungsachse enthaltenden Ebene erstreckt, von einem Anfangspunkt bis zu einem Endpunkt, die in dieser Ebene enthalten sind, wobei sie im Zickzack beiderseits der Wicklungsachse verläuft, wobei diese Leiterbahn somit, indem sie vom Anfangspunkt zum Endpunkt verläuft, eine Folge von unmittelbar aufeinander folgenden und stumpf aneinander stoßenden Trumen Bᵢ definiert, wobei sich jedes Trum Bᵢ beiderseits der Wicklungsachse erstreckt und diese Wicklungsachse an einer einzigen Stelle schneidet, wobei der Index i eine laufende Nummer des Trums in der Folge von Trumen ist, beginnend am Anfangspunkt,
- die Herstellung von Einschnitten (106; 140) zwischen den aufeinander folgenden Trumen Bᵢ, wobei jeder Einschnitt die Wicklungsachse schneidet und geeignet ist, den Schlauch aufzunehmen, und
- das Einsetzen (108) des Schlauches in die Einschnitte entlang der Wicklungsachse, wobei er oberhalb des Trums B₁, dann unterhalb des Trums B₂, dann oberhalb des Trums B₃, und so weiter bis zum letzten Trum der Folge von Trumen, vorbeibewegt wird.

## Claims

1. Fluid pressure sensor, this sensor including:
- a flexible pipe (16) extending around and along a central axis (17), this pipe being adapted to contain the fluid the pressure of which must be measured and to be deformed by the effect of the pressure exerted by the fluid, between:
• a first deformed position for a first pressure exerted by the fluid, the pipe having in this first position different first and second locations on its periphery the orthogonal projections of which in a plane perpendicular to the central axis are separated by a distance d₁, and
• a second deformed position for a second pressure exerted by the fluid higher than the first pressure in the second position the orthogonal projections of the first and second locations in the plane perpendicular to the central axis are separated by a distance d₂, the difference between the distances d₂ and d₁ being at least greater than 0.1d₂,
- a coil (20; 120; 138; 150; 200; 262; 270; 280) the self inductance of which varies as a function of the pressure of the fluid inside the flexible pipe, this coil including at least one turn (22; 160, 168; 214, 220; 274; 284) wound around a winding axis (17) of the coil coinciding with the central axis of the pipe, said at least one turn including:
• a first portion (40) of its periphery mechanically connected to the first location on the periphery of the pipe by a first mechanical connection which rigidly connects this first portion to this first location, and
• a second portion (42) of its periphery, separate from the first portion, mechanically connected to the second location on the periphery of the pipe by a second mechanical connection separate from the first mechanical connection which rigidly connects this second portion to this second location so that the tranverse area of this turn varies as a function of the deformation of the pipe,
- a unit (6) for calculating the pressure of the fluid as a function of the self inductance of the coil,
**characterized in that** the turn includes a third (48) and a fourth (50) free portions situated between the first and second portions and each on a respective side of the central axis of the pipe, these third and fourth free portions being each separated from the flexible pipe by a clearance (52, 54).

2. Sensor according to Claim 1, wherein said at least one turn (22; 160, 168; 214, 220; 274; 284) is wound around the flexible pipe.

3. Sensor according to Claim 2, wherein the sensor includes:
- two reinforcements (68, 70) situated between the pipe and the third portion (48) and the fourth portion (50) of each turn, respectively, each reinforcement being produced in a an electrically insulative material and extending parallel to the central axis and being separated from the pipe by the clearance, and
- an electrically conductive material wire (282) wound around these two reinforcements and the flexible pipe to form said at least one turn (284) so that this turn surrounds these two reinforcements and the flexible pipe.

4. Sensor according to Claim 2 or 3, wherein the maximum width of the clearance in the first position is greater than one twentieth of the interior perimeter of the turn.

5. Sensor according to Claim 1, wherein said at least one turn is situated inside the flexible pipe.

6. Sensor according to any one of the preceding claims, wherein each turn includes an upper segment (58) situated above the winding axis and a lower segment (60) situated below the winding axis, the upper segment joining the lower segment at the level of a plane edge (62, 64) extending in a plane, all the plane edges of all the turns of the coil lying in the same plan.

7. Sensor according to Claim 6, wherein the sensor includes a printed circuit (202) including:
- an electrically insulative substrate (204) lying mainly in the plane containing the edges,
- a first electrical track (206) disposed on a first face of the substrate, this first electrical track forming the upper and lower segments of each turn,
- a first electrode (230, 232) disposed on the first face, and
- a second electrode (234, 236) disposed on a second face opposite the first face of the substrate, this second electrode facing the first electrode to form with the first electrode a capacitor electrically connected to the coil.

8. Sensor according to any one of the preceding claims, wherein the sensor includes at least one electrically insulative reinforcement (68, 70) the Young's modulus of which is at least twice the Young's modulus of the flexible pipe, this reinforcement extending continuously parallel to the central axis and each turn being rigidly fixed to this reinforcement.

9. Sensor according to any one of the preceding claims, wherein the coil (20; 120; 138; 150; 200; 262; 270; 280) includes a plurality of immediately consecutive turns each extending from a starting point (76) to an arrival point (78) situated in the same plane after making exactly one complete turn around the winding axis (17), this plane containing the winding axis, the arrival point of a turn constituting the starting point of the immediately consecutive turn, the pitch of each turn being less than one twentieth of the interior perimeter of this turn measured between its starting and arrival points, the pitch of a turn being the distance between the orthogonal projections of these arrival and starting points on the winding axis.

10. Sensor according to any one of the preceding claims, wherein the orthogonal projections of the first and second portions (40, 42) of the turn in a plane perpendicular to the winding axis are disposed face to face and on each side of the winding axis.

11. Method of manufacturing a pressure sensor according to any one of the previous claims, this method including:
a) procuring (100) a flexible pipe extending around and along a central axis, this pipe being adapted to contain the fluid the pressure of which must be measured and to be deformed by the effect of the pressure exerted by the fluid, between:
• a first deformed position for a first pressure exerted by the fluid, the pipe having in this first position different first and second locations on its periphery the orthogonal projections of which in a plane perpendicular to the central axis are separated by a distance d₁, and
• a second deformed position for a second pressure exerted by the fluid higher than the first pressure in the second position the orthogonal projections of the first and second locations in the plane perpendicular to the central axis are separated by a distance d₂, the difference between the distances d₂ and d₁ being at least greater than 0.1d₂,
b) the production (102; 128; 152, 170, 172) of a coil the self inductance of which varies as a function of the pressure of the fluid inside the flexible pipe, this coil including at least one turn wound around a winding axis of the coil coinciding with the central axis of the pipe, and:
• a first portion of the periphery of said at least one turn is mechanically connected to the first location on the periphery of the pipe by a first mechanical connection which rigidly connects this first portion to this first location, and
• a second portion of the periphery of said at least one turn, separate from the first portion, is mechanically connected to the second location on the periphery of the pipe by a second mechanical connection separate from the first mechanical connection which rigidly connects this second portion to this second location so that the tranverse area of this turn varies as a function of the deformation of the pipe,
c) the procurement (112) of a unit for calculating the pressure of the fluid as a function of the self inductance of the coil,
**characterized in that** during the step b) a third free portion and a fourth free portion of the turn situated between the first and second portions are each on a respective side of the central axis of the pipe, and each separated from the flexible pipe by a clearance.

12. Method according to claim 11, wherein the step b) comprises:
- the production (104; 130; 152) of an electrically conductive track lying in a plane containing the winding axis from a starting point to an arrival point contained in this plane, zig-zagging on either side of the winding axis, this electrical track therefore defining from the starting point to the arrival point a succession of immediately consecutive and end-to-end segments Bᵢ, each segment Bᵢ extending on either side of the winding axis and intersecting this winding axis at only one place, where the index i is a segment order number in the succession of segments starting from the starting point,
- the production of notches (106; 140) between the successive segments Bᵢ, each notch intersecting the winding axis and being adapted to receive the flexible pipe, and
- the insertion (108) of the flexible pipe in the notches, along the winding axis, passing over the segment B₁ and then under the segment B₂, then over the segment B₃, and so on up to the last segment of the succession of segments.
